# EUROPEAN PATENT SPECIFICATION

(11) **EP 2 397 924 B1**
(45) Date of publication and mention of the grant of the patent: **20.11.2013**
(21) Application number: 09839882.9
(22) Date of filing: 20.03.2009
(51) Int. Cl.: G05B 19/04, G08C 17/02, G05B 19/042

(54) **BIDIRECTIONAL WIRELESS ELECTRICAL ENERGY MONITORING SYSTEM**
BIDIREKTIONALES DRAHTLOSES STROMÜBERWACHUNGSSYSTEM
SYSTÈME BIDIRECTIONNEL SANS FIL DE SURVEILLANCE D'ÉNERGIE ÉLECTRIQUE

(30) Priority: 10.02.2009 CN 200910037128
(43) Date of publication of application: 21.12.2011
(73) Proprietor: Dong Guan Ricktek Electric-mechanical Co., Ltd., Guangdong 523000 (CN)
(72) Inventor: YANG, Qi, Guangdong 523000 (CN)
(74) Representative: Vandeberg, Marie-Paule L.G.
(86) International application number: PCT/CN2009/070929
(87) International publication number: WO 2010/091559

(56) References cited:
- EP-A1- 0 825 577
- WO-A1-01/24345
- CN-A- 1 866 309
- CN-A- 101 241 634
- Integration Associates Inc.: "IA4421 Universal ISM Band FSK Transceiver", , February 2007 (2007-02), XP002679843, Retrieved from the Internet: URL:http://www.cdiweb.com/datasheets/integ ration/IA4421-DS.pdf [retrieved on 2012-07-11]

## Description

### Field of the Invention

The present invention relates to the technical field of energy monitoring system, and particularly to a bidirectional wireless electrical energy monitoring system. The present invention is based on the Chinese Invention Patent Application No. 200910037128.4, filed February 10, 2009, the content of which is incorporated herein by reference.

### Background of the Invention

The electrical energy is one of the important energy sources, which is used widely in the industrial and agricultural production and daily life. Currently, as the energy sources are increasingly decreasing, energy saving becomes an important study task. Various methods have been taken to control the loss of electrical energy with respect to the transmission of power supply and the performance of energy saving of the electrical equipment and so on, and all of these energy saving measures have certain energy saving effect.

Unidirectional wireless electrical energy monitoring system is a new energy saving monitoring system, which is mainly composed of a unidirectional wireless electrical energy monitoring apparatus and a unidirectional wireless electrical energy monitoring switchgear. The unidirectional wireless electrical energy monitoring apparatus typically includes a first microprocessor, a display module, a key module and a wireless unidirectional receiving module. The unidirectional wireless electrical energy monitoring switchgear typically includes a second microprocessor, a current induction module, a switch control circuit and a wireless unidirectional transmitting module. The unidirectional wireless electrical energy monitoring switchgear is connected to a socket corresponding to the electrical equipment and senses a corresponding current signal through the current induction module. This current signal is processed by the second microprocessor and after that transmitted to the wireless unidirectional transmitting module which then sends it to the wireless unidirectional receiving module of the unidirectional electrical energy monitoring apparatus, and after the processing by the first microprocessor the signal is transmitted to the display module and output from the display module to an external display screen for displaying the electrical energy parameters, such as the power of electrical equipment, the power consumption and real time, etc. Between such unidirectional wireless electrical energy monitoring apparatus of the unidirectional wireless electrical energy monitoring system and the unidirectional wireless electrical energy monitoring switchgear, only one-way signal transmission can be realized and bidirectional operation and control and remote control may not be implemented, which causes inconvenience for use and has considerable limitation.

### Summary of the Invention

The object of the present invention is to provide a bidirectional wireless electrical energy monitoring system for overcoming the disadvantages in the prior art. Bidirectional signal transmission and bidirectional control and remote control may be realized by such bidirectional wireless electrical energy monitoring system.

In order to realize the above object, the present invention is implemented by the technical solution as follows. The present invention includes a bidirectional wireless electrical energy monitoring apparatus for monitoring an electrical equipment and a bidirectional wireless electrical energy monitoring switchgear. The bidirectional wireless electrical energy monitoring apparatus includes a first microprocessor, a display module and a first key module, an input of the display module being connected to a display driving output of the first microprocessor, and an output of the first key module being connected to a key detection input of the first microprocessor. The bidirectional wireless electrical energy monitoring switchgear includes a second microprocessor, a current induction module for measuring a current of the electrical equipement and a switch control circuit, for powering on/off the electrical equipment an output of the current induction module being connected to a current detection input of the second microprocessor, and an input of the switch control circuit being connected to a control output of the second microprocessor. The bidirectional wireless electrical energy monitoring apparatus also includes a first wireless bidirectional module for receiving a current signal from the bidirectional wireless electrical energy monitoring switchgear and transmitting a control signal to the bidirectional wireless electrical energy monitoring switchgear, the first wireless bidirectional module being connected to the first microprocessor. The bidirectional wireless electrical energy monitoring switchgear also includes a second wireless bidirectional module for receiving the control signal from the bidirectional wireless electrical energy monitoring apparatus and transmitting the current signal of electrical equipment to the first wireless bidirectional module of the bidirectional wireless electrical energy monitoring apparatus, the second wireless bidirectional module being connected to the second microprocessor. Bidirectional wireless connection is realized between the bidirectional wireless electrical energy monitoring apparatus and the bidirectional wireless electrical energy monitoring switchgear through the first wireless bidirectional module and the second wireless bidirectional module, for controlling, via a key input in the first key module, and via the bidirectional wireless connection, the switch control circuit of the bidirectional electrical energy monitoring switchgear for powering on/off the monitored electrical equipment.

The first wireless bidirectional module is composed of a radio frequency transceiver chip U1_1, a crystal oscillator Y1_1, an antenna J1_1, capacitors C1_1, C1_2, C1_4, C1_5 and inductances L1_1, L1_2, L1_3. One end of the crystal oscillator Y1_1 is connected to the 9 pin of the radio frequency transceiver chip U1_1, and the other end is grounded; one end of the capacitor C1_5 is connected to the 15 pin of the radio frequency transceiver chip U1_1, and the other end is grounded; the inductance L1_1 is connected between the 12 pin and 13 pin of the radio frequency transceiver chip U1_1, and the inductance L1_2 is connected between the 12 pin and 14 pin of the radio frequency transceiver chip U1_1; one end of the capacitor C1_1 is connected to the 13 pin of the radio frequency transceiver chip U1_1, and the other end is grounded; one end of the capacitor C1_4 is connected to the 12 pin of the radio frequency transceiver chip U1_1, the other end is connected to one end of the inductance L1_3, and the other end of the inductance L1_3 is connected to the 13 pin of the radio frequency transceiver chip U1_1; one end of the capacitor C1_2 is connected to the intersection of the inductances L1_3 and C1_4, and the other end is connected to the antenna J1_1; the 11 pin of the radio frequency transceiver chip U1_1 is a grounding pin which is grounded, the 14 pin of the radio frequency transceiver chip U1_1 is a power pin for providing power, and the 1-8 pins, 10 pin and 16 pin of the radio frequency transceiver chip U1_1 are connected to the first microprocessor.

The first wireless bidirectional module uses IA4421 as the radio frequency transceiver chip U1_1.

The bidirectional wireless electrical energy monitoring apparatus further includes a clock and calendar module that is connected to the first microprocessor for configuration of the clock and calendar.

The bidirectional wireless electrical energy monitoring apparatus further includes a first power source module which is composed of a first power input circuit and a first voltage regulator circuit. The input of the first power input circuit is connected to an external power source, the output of the first power input circuit is connected to the input of the first voltage regulator circuit, and the output of the first voltage regulator circuit is connected to the power inputs of the first microprocessor, the display module, the first key module, the first wireless bidirectional module and the clock and calendar module, respectively.

The second wireless bidirectional module is composed of a radio frequency transceiver chip U2_1, a crystal oscillator Y2_1, an antenna J2_1, capacitors C2_1, C2_2, C2_4, C2_5 and inductances L2_1, L2_2, L2_3. One end of the crystal oscillator Y2_1 is connected to the 9 pin of the radio frequency transceiver chip U2_1, and the other end is grounded; one end of the capacitor C2_5 is connected to the 15 pin of the radio frequency transceiver chip U2_1, and the other end is grounded; the inductance L2_1 is connected between the 12 pin and 13 pin of the radio frequency transceiver chip U2_1, and the inductance L2_2 is connected between the 12 pin and 14 pin of the radio frequency transceiver chip U2_1; one end of the capacitor C2_1 is connected to the 13 pin of the radio frequency transceiver chip U2_1, and the other end is grounded; one end of the capacitor C2_4 is connected to the 12 pin of the radio frequency transceiver chip U2_1, the other end is connected to one end of the inductance L2_3, and the other end of the inductance L2_3 is connected to the 13 pin of the radio frequency transceiver chip U2_1; one end of the capacitor C2_2 is connected to the intersection of the inductances L2_3 and C2_4, and the other end is connected to the antenna J2_1; the 11 pin of the radio frequency transceiver chip U2_1 is a grounding pin which is grounded, the 14 pin of the radio frequency transceiver chip U2_1 is a power pin for providing power, and the 1-8 pins, 10 pin and 16 pin of the radio frequency transceiver chip U2_{_}1 are connected to the second microprocessor.

The second wireless bidirectional module uses IA4421 as the radio frequency transceiver chip U2_1.

The bidirectional wireless electrical energy monitoring switchgear further includes a second key module, an indicator circuit. The output of the second key module is connected to the key detection input of the second microprocessor, and the input of the indicator circuit is connected to the status output of the second microprocessor.

The bidirectional wireless electrical energy monitoring switchgear further includes a second power source module which includes a second power input circuit, a rectifying circuit and a second voltage regulator circuit. The input of the second power input circuit is connected to an external power source, the output of the second power input circuit is connected to the AC input of the switch control circuit and the input of the rectifying circuit, respectively, the output of the rectifying circuit is connected to the AC input of the switch control circuit and the input of the second voltage regulator circuit, respectively, the output of the second voltage regulator circuit is connected to the DC inputs of the second microprocessor, the current induction module, the second wireless bidirectional module, the second key module and the indicator circuit, respectively.

The second power source module further includes a voltage detection circuit. The input of the voltage detection circuit is connected to the output of the second power input circuit, and the output of the voltage detection circuit is connected to the voltage detection input of the second microprocessor for detecting the input voltage of the power source.

The present invention has beneficial effects as follows. The bidirectional wireless electrical energy monitoring system according to the present invention includes a bidirectional wireless electrical energy monitoring apparatus and a bidirectional wireless electrical energy monitoring switchgear. The first wireless bidirectional module of the bidirectional wireless electrical energy monitoring apparatus may receive a current signal from the bidirectional wireless electrical energy monitoring switchgear and transmitting a control signal to the bidirectional wireless electrical energy monitoring switchgear; the second wireless bidirectional module the bidirectional wireless electrical energy monitoring switchgear may receive the control signal from the bidirectional wireless electrical energy monitoring apparatus or transmit the current signal of electrical equipment to the bidirectional wireless electrical energy monitoring apparatus. As can be seen from the above technical solution, the first wireless bidirectional module of the present invention matches the second wireless bidirectional module, which may implement bidirectional signal transmission, therefore, the present invention may realize the bidirectional signal transmission, bidirectional control and remote control between the bidirectional wireless electrical energy monitoring apparatus and the bidirectional wireless electrical energy monitoring switchgear, the power consumption of multiple electrical equipments may be monitored by the bidirectional wireless electrical energy monitoring switchgear, and the users may operate the keys in the first key module, according to the power consumption sent by the bidirectional wireless electrical energy monitoring switchgear, to control the switch control circuit of the bidirectional wireless electrical energy monitoring switchgear, thereby powering on/off the electrical equipment, which has the effects of prompting power saving and reasonable power consumption.
It is noted that WO 01/24345 describes a monitoring device consisting of a collecting unit and a reading unit. The collecting unit comprises a registration means, a control means and a memory means and is characterised by an activation detector and a communication means for wireless data transfer. The reading unit comprises a control means and has an activation means to activate the reading unit and communication means for wireless data transfer. The activating of the reading unit is performed by means separate from the wireless data transfer. At suitable occasions, the collecting unit is activated by light to initiate a transfer of data via radio waves to the reading unit. After the transfer, the transferring functions of collecting unit return to an inactive state. A bidirectional transfer of data may be present for managing the reading unit.
It is further noted that the datasheet "IA4421 Universal ISM Bank FSL transceiver" discloses a schema for a Universal ISM bank transceiver"
It is further noted that EP 0 825 577 discloses a system for the remote recognition and reading of meters to measure the consumption of utilities such as electric energy, water, gas, etc., used for remote communication between a metering unit and a reading device, the metering unit comprising at least a measuring device associated with a device to emit pulses, the metering unit comprising means to acquire, process and transmit data connected at the inlet to the pulse-emitting device and at the outlet to a transreceiver unit, the transreceiver unit consisting of an unpowered passive component which can be activated for reception and/or transmission by means of a signal emitted on a radio-frequency generated by a transreceiver associated with the reading device.

### Brief Description of the Drawings

Figure 1 is a schematic diagram of connection between the bidirectional wireless electrical energy monitoring apparatus, the bidirectional wireless electrical energy monitoring switchgear and the electrical equipment according to the present invention;

Figure 2 is a block diagram showing the principle of the bidirectional wireless electrical energy monitoring apparatus according to the present invention;

Figure 3 is a block diagram showing the principle of the bidirectional wireless electrical energy monitoring switchgear according to the present invention;

Figure 4 is a schematic diagram showing the circuit of the first wireless bidirectional module according to the present invention;

Figure 5 is a schematic diagram showing the circuits of the clock and calendar module and the first power source module according to the present invention;

Figure 6 is a schematic diagram showing the circuit of the first microprocessor according to the present invention;

Figure 7 is a schematic diagram showing the circuits of the display module and the first key module according to the present invention;

Figure 8 is a schematic diagram showing the circuit of the second wireless bidirectional module according to the present invention;

Figure 9 is a schematic diagram showing the circuits of the second microprocessor, the current induction module, the second key module and the indicator circuit according to the present invention;

Figure 10 is a schematic diagram showing the circuits of the second power source module and the switch control circuit according to the present invention.

### Detailed Description of the Embodiments

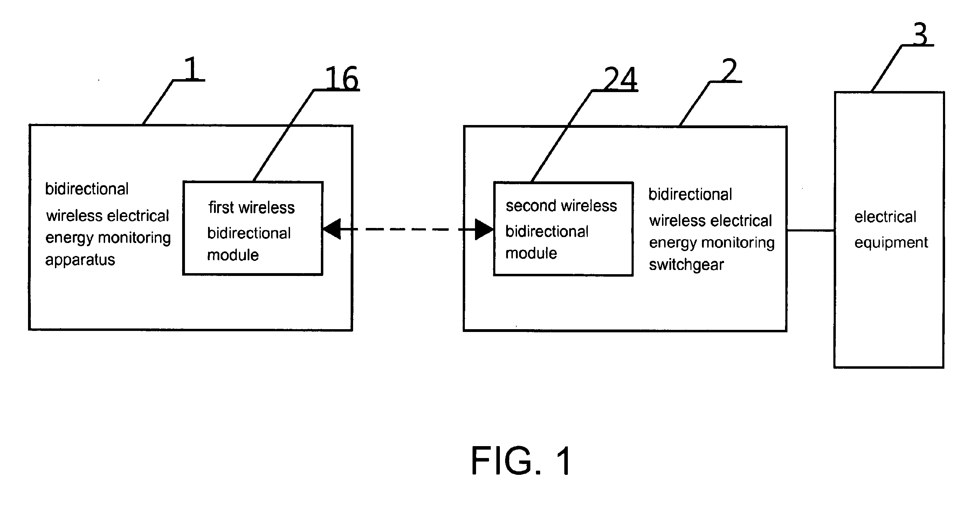

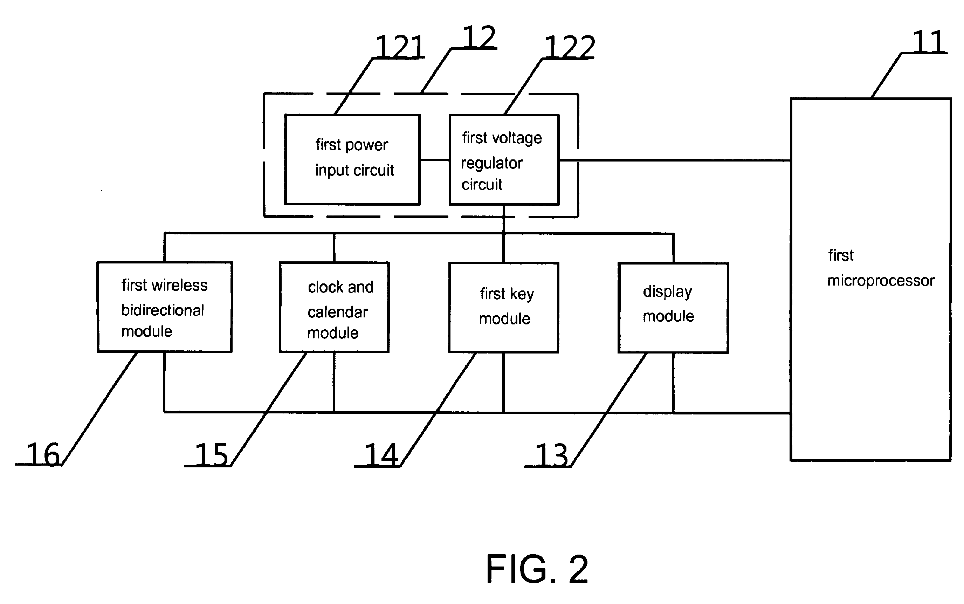

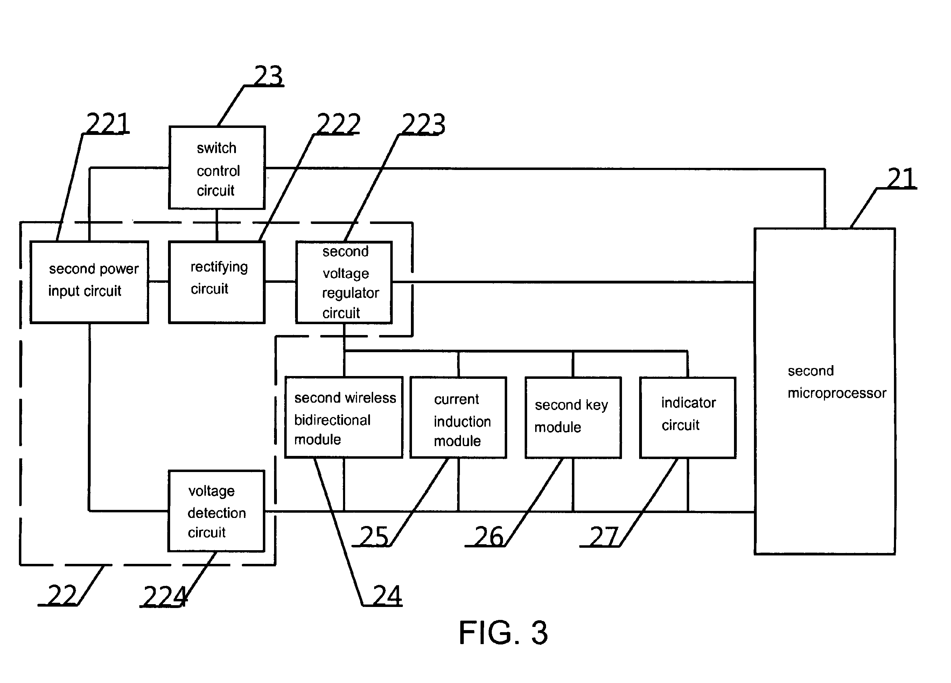

The present invention will be further described with reference to the figures. Referring to figures 1 to 3, the bidirectional wireless electrical energy monitoring system includes a bidirectional wireless electrical energy monitoring apparatus 1 and a bidirectional wireless electrical energy monitoring switchgear 2. The bidirectional wireless electrical energy monitoring switchgear 2 is connected to a socket corresponding to the electrical equipment 3; the bidirectional wireless electrical energy monitoring apparatus 1 includes a first wireless bidirectional module 16 which may receive a current signal from the bidirectional wireless electrical energy monitoring switchgear 2 or transmit a control signal to the bidirectional wireless electrical energy monitoring switchgear 2; the bidirectional wireless electrical energy monitoring switchgear 2 includes a second wireless bidirectional module 24 which may receive the control signal from the bidirectional wireless electrical energy monitoring apparatus 1 or transmit the current signal of electrical equipment 3 to the bidirectional wireless electrical energy monitoring apparatus 1; the first wireless bidirectional module 16 matches the second wireless bidirectional module 24, which may implement bidirectional signal transmission, therefore, the present invention may realize the bidirectional signal transmission, bidirectional control and remote control between the bidirectional wireless electrical energy monitoring apparatus 1 and the bidirectional wireless electrical energy monitoring switchgear 2, the power consumption of the electrical equipment 3 may be monitored by the bidirectional wireless electrical energy monitoring switchgear 2, and the bidirectional wireless electrical energy monitoring apparatus 1 may reversely control the bidirectional wireless electrical energy monitoring switchgear 2 according to the power consumption sent by the bidirectional wireless electrical energy monitoring switchgear 2, thereby powering on/off the electrical equipment 3, which has the effects of prompting power saving and reasonable power consumption.

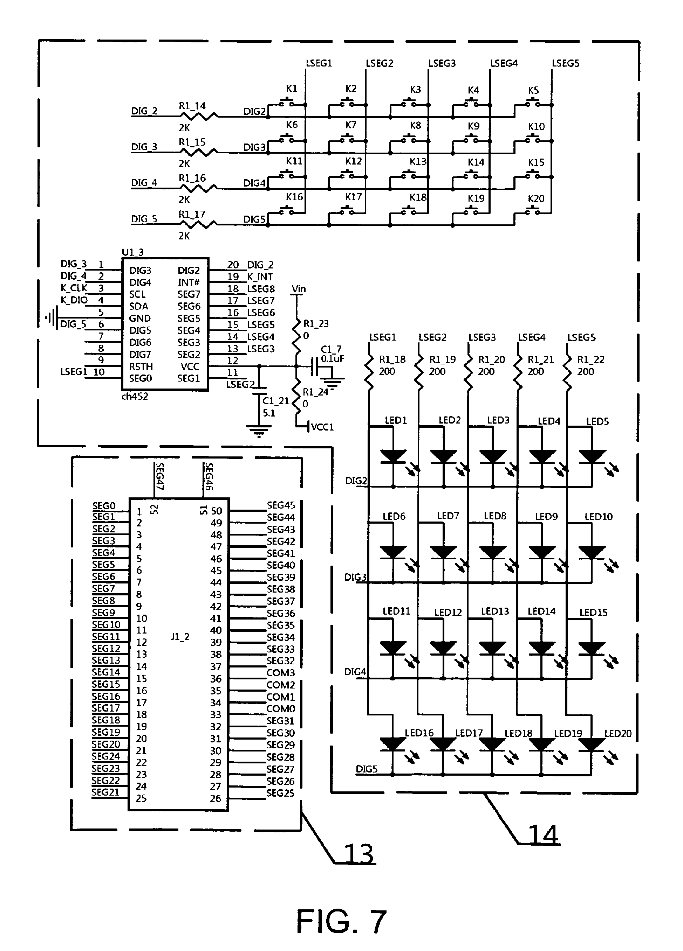

The bidirectional wireless electrical energy monitoring apparatus 1 according to the present invention includes a first microprocessor 11, a display module 13 and a first key module 14. An input of the display module 14 is connected to a display driving output of the first microprocessor 11 such that the first microprocessor 11 may drive an external display screen through the display module 13 for displaying the electrical energy parameters, such as the power, the power consumption and real time of electrical equipment 3, etc. An output of the first key module 14 is connected to a key detection input of the first microprocessor 11 such that the user may input a control signal through the first key module 14 to control the bidirectional wireless electrical energy monitoring switchgear 2. As shown in figure 7, when a key K of the first key module 14 is pressed, an instruction of the key K is transmitted to the execution end, and after reception of the instruction of the key K, the execution end feeds back the execution status of the instruction to the LED lamp. For example, if the execution end executes the instruction of the key K, the LED lamp is lightened after receiving the feedback instruction from the execution end; otherwise, if the execution end does not execute the instruction of the key K, the LED lamp is not lightened after receiving the feedback instruction from the execution end. Therefore, it can be determined whether the instruction has been executed according to whether the LED lamp is lightened after a key K is pressed,

The bidirectional wireless electrical energy monitoring apparatus 1 according to the present invention further includes a clock and calendar module 15 and a first power source module 12. The clock and calendar module 15 is connected to the first microprocessor 11 for setting the clock and calendar; the first power source module 12 is composed of a first power input circuit 121 and a first voltage regulator circuit 122. The input of the first power input circuit 121 is connected to an external power source, the output of the first power input circuit 121 is connected to the input of the first voltage regulator circuit 122, and the output of the first voltage regulator circuit 122 is connected to the power inputs of the first microprocessor 11, the display module 13, the first key module 14, the first wireless bidirectional module 16 and the clock and calendar module 15, respectively, for providing the first microprocessor 11, the display module 13, the first key module 14, the first wireless bidirectional module 16 and the clock and calendar module 15 with working power.

The bidirectional wireless electrical energy monitoring switchgear 2 according to the present invention includes a second microprocessor 21, a current induction module 25 and a switch control circuit 23. An output of the current induction module 25 is connected to a current detection input of the second microprocessor 21, such that the second microprocessor 21 may measure the current used by the electrical equipment 3 through the current induction module 25; an input of the switch control circuit 23 is connected to a control output of the second microprocessor 21, such that the second microprocessor 21 may control the power off/on of the electrical equipment 3 through the switch control circuit 23.

The bidirectional wireless electrical energy monitoring switchgear 2 according to the present invention further includes a second key module 26 and an indicator circuit 27. The output of the second key module 26 is connected to the key detection input of the second microprocessor 21, and the input of the indicator circuit 27 is connected to the status output of the second microprocessor 21, such that the operator may input a control signal through the second key module 26 and the control signal is output from the second microprocessor 21 to the switch control circuit 23 and the indicator circuit 27, thereby controlling the working status of the switch control circuit 23 and the indicating status of the indicator circuit 27.

The bidirectional wireless electrical energy monitoring switchgear 2 according to the present invention further includes a second power source module 22 which includes a second power input circuit 221, a rectifying circuit 222 and a second voltage regulator circuit 223. The input of the second power input circuit 221 is connected to an external power source, the output of the second power input circuit 221 is connected to the AC input of the switch control circuit 23 and the input of the rectifying circuit 222, respectively, the output of the switch control circuit 23 is used to be connected to the power input of the electrical equipment 3, the output of the rectifying circuit 222 is connected to the AC input of the switch control circuit 23 and the input of the second voltage regulator circuit 223, respectively. When the switch control circuit 23 is switched on, the electrical equipment 3 is powered on, and when the switch control circuit 23 is switched off, the electrical equipment 3 is powered off. The output of the second voltage regulator circuit 223 is connected to the DC inputs of the second microprocessor 21, the current induction module 25, the second wireless bidirectional module 24, the second key module 26 and the indicator circuit 27, respectively, for providing the second microprocessor 21, the current induction module 25, the second wireless bidirectional module 24, the second key module 26 and the indicator circuit 27 with working power. The second power source module 22 further includes a voltage detection circuit 224. The input of the voltage detection circuit 224 is connected to the output of the second power input circuit, and the output of the voltage detection circuit 224 is connected to the voltage detection input of the second microprocessor 21 for detecting the input voltage of the power source, such that the second microprocessor 21 may detect whether the voltage of power source is normal through the voltage detection circuit 224, therefore the functions of overvoltage protection, under-voltage protection and overload protection may be realized by the present invention.

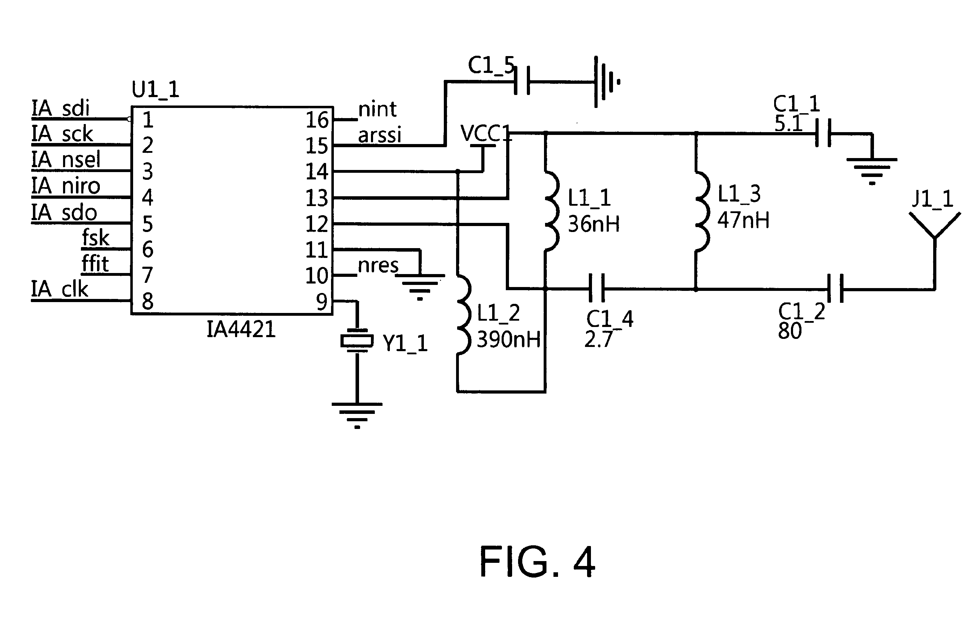

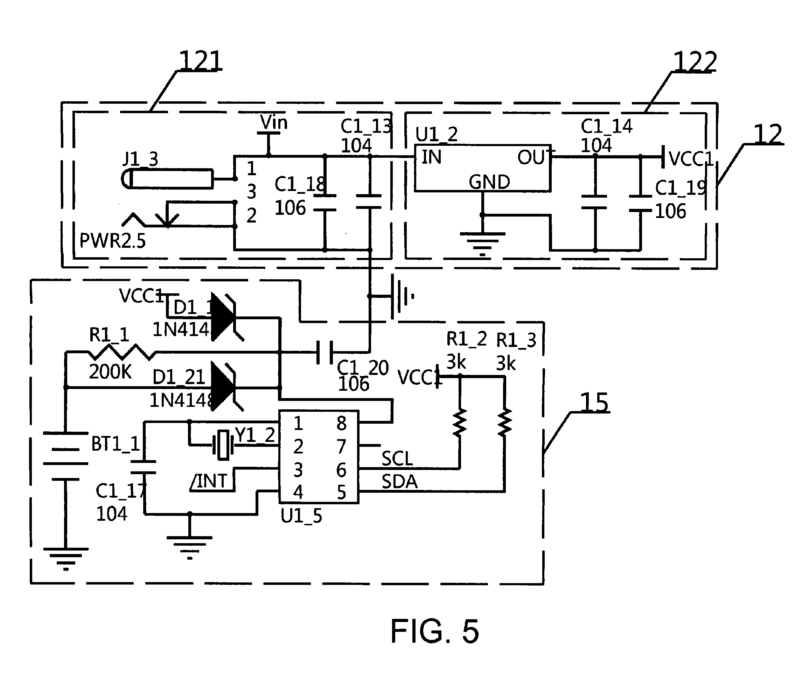

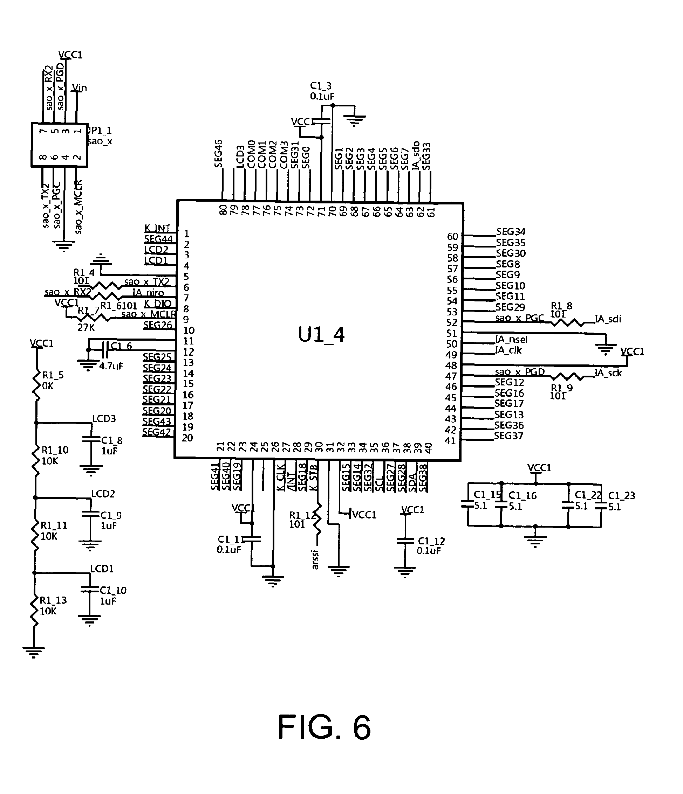

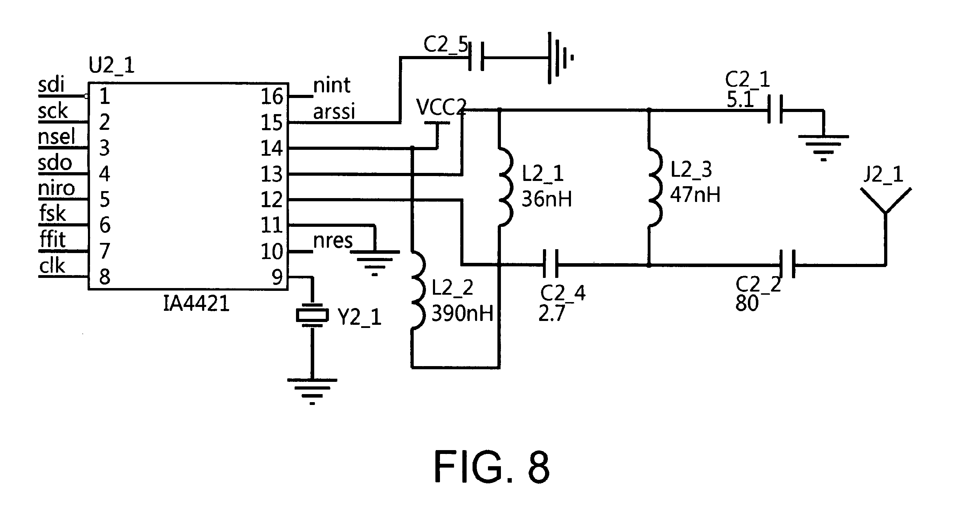

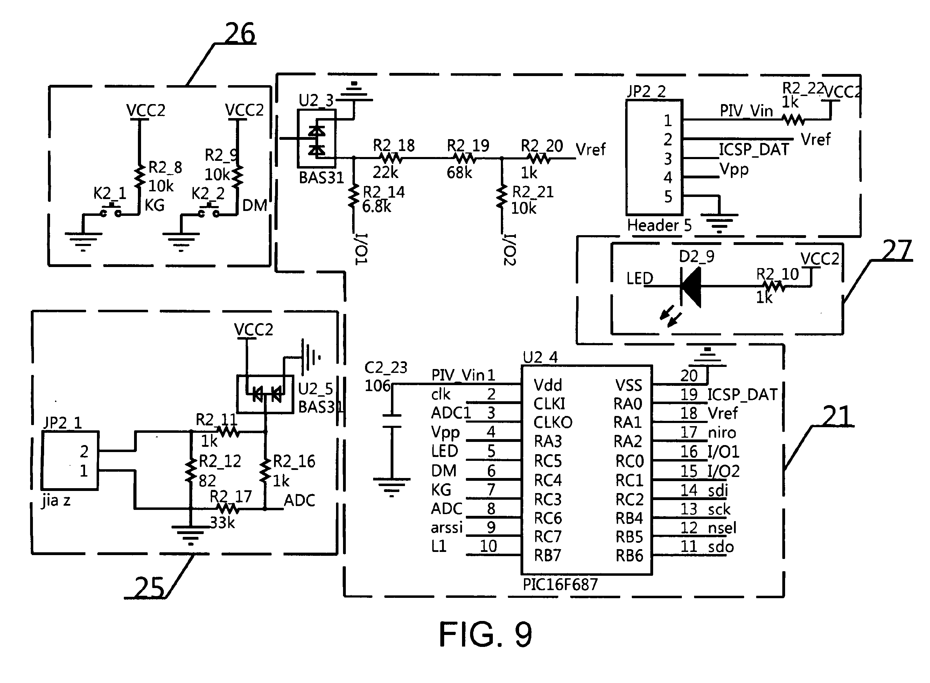

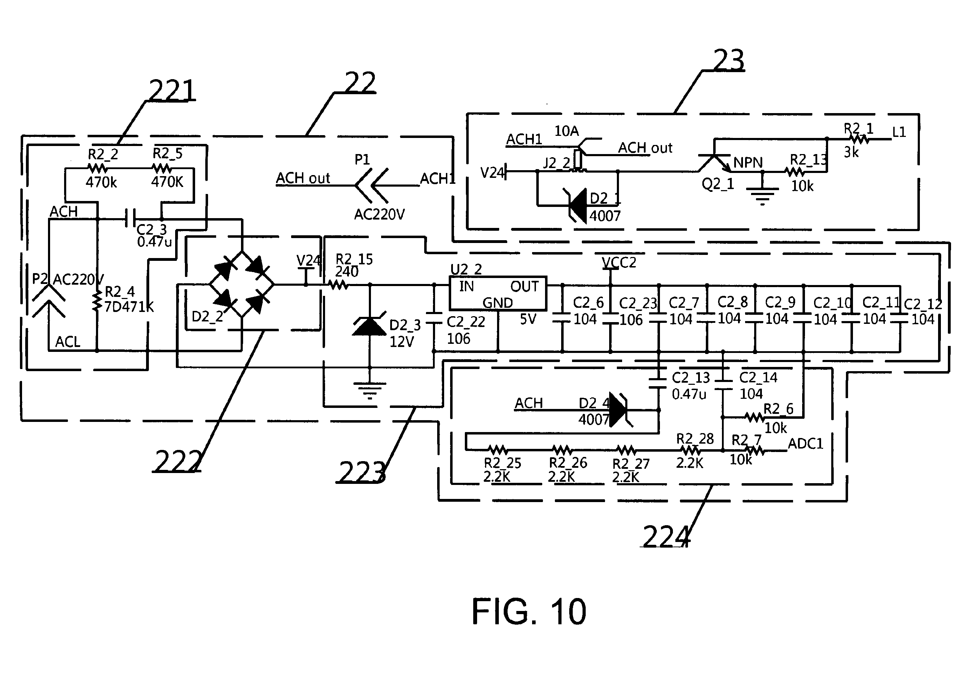

Referring to figures 4 to 10, they show the particular circuit diagrams of the present invention. The first wireless bidirectional module 16 according to the present invention is composed of a radio frequency transceiver chip U1_1, a crystal oscillator Y1_1, an antenna J1_1, capacitors C1_1, C1_2, C1_4, C1_5 and inductances L1_1, L1_2, L1_3. One end of the crystal oscillator Y1_1 is connected to the 9 pin of the radio frequency transceiver chip U1_1, and the other end is grounded; one end of the capacitor C1_5 is connected to the 15 pin of the radio frequency transceiver chip U1_1, and the other end is grounded; the inductance L1_1 is connected between the 12 pin and 13 pin of the radio frequency transceiver chip U1_1, and the inductance L1_2 is connected between the 12 pin and 14 pin of the radio frequency transceiver chip U1_1; one end of the capacitor C1_1 is connected to the 13 pin of the radio frequency transceiver chip U1_1, and the other end is grounded; one end of the capacitor C1_4 is connected to the 12 pin of the radio frequency transceiver chip U1_1, the other end is connected to one end of the inductance L1_3, and the other end of the inductance L1_3 is connected to the 13 pin of the radio frequency transceiver chip U1_1; one end of the capacitor C1_2 is connected to the intersection of the inductances L1_3 and C1_4, and the other end is connected to the antenna J1_1; the 11 pin of the radio frequency transceiver chip U1_1 is a grounding pin which is grounded, the 14 pin of the radio frequency transceiver chip U1_1 is a power pin for providing power, and the 1-8 pins, 10 pin and 16 pin of the radio frequency transceiver chip U1_1 are connected to the first microprocessor 11. The antenna J1_1 may receive the signal from the second wireless bidirectional module 24 and output to the radio frequency transceiver chip U1_1 which then outputs the signal to the first microprocessor 11. When the first microprocessor 11 outputs the control signal to the radio frequency transceiver chip U1_1, the radio frequency transceiver chip U1_1 performs coding processing on the control signal and then output it to the antenna J1_1 which may transmit the control signal to the second wireless bidirectional module 24.

The clock and calendar module 15 is composed of a clock chip U1_5, a crystal oscillator Y1_2, a backup battery BT1_1, resistors R1_1, R1_2, R1_3, capacitors C1_17, C1_20 and diodes D1_1, D1_21. Y1_2 is connected between the 1 pin and 2 pin of the U1_5, C1_17 is connected between the 1 pin and 4 pin of the U1_5, and the 4 pin of the U1_5 is grounded; one end of R1_2 is connected to the 6 pin (SCL pin) of the U1_5, and the other end is connected to the power source (VCC1), one end of R1_3 is connected to the 5 pin (SDA pin) of the U1_5, and the other end is connected to the power source; one end of C1_20 is connected to the 8 pin of the U1_5, and the other end is grounded, the cathode of the C1_21 is connected to the 8 pin of the U1_5, and the anode is connected to the power source; the cathode of the D1_21 is connected to the 8 pin of the U1_5, and the anode is connected to the anode of the BT1_1; one end of the R1_1 is connected to the 8 pin of the U1_5, the other end is connected to the anode of the BT1_1, and the cathode of the BT1_1 is grounded; the 3 pin (INT) of the U1_5 is connected to the first microprocessor 11. Since the backup battery BT1_1 is provided, when the power input of the clock and calendar module 15 has no input power, the backup battery BT1_1 may keep the clock and calendar module 15 working normally.

The first power source module 12 is composed of a first power input circuit 121 and a first voltage regulator circuit 122. The first power input circuit 121 is composed of a power socket J1_3 and capacitors C1_13, C1_18. The capacitors C1_13, C1_18 are both connected between the 1 pin and 2 pin of the power socket J1_3 in parallel, and the 2 pin of J1_3 is grounded; the first voltage regulator circuit 122 is composed of a power voltage regulator chip U1_2 and capacitors C1_14, C1_19. The 1 pin of U1_2 is connected to the 1 pin of the power socket J1_3, and the 2 pin of U1_2 is grounded. The capacitors C1_14, C1_19 are both connected between the 2 pin and 3 pin of the U1_2 in parallel, and the 3 pin of the U1_2 is an output of the first power source module 12, for providing the first microprocessor 11, the display module 13, the first key module 14, the first wireless bidirectional module 16 and the clock and calendar module 15 with working power.

The second wireless bidirectional module 24 according to the present invention is composed of a radio frequency transceiver chip U2_1, a crystal oscillator Y2_1, an antenna J2_1, capacitors C2_1, C2_2, C2_4, C2_5 and inductances L2_1, L2_2, L2_3. One end of the crystal oscillator Y2-1 is connected to the 9 pin of the radio frequency transceiver chip U2_1, and the other end is grounded; one end of the capacitor C2_5 is connected to the 15 pin of the radio frequency transceiver chip U2-1, and the other end is grounded; the inductance L2_1 is connected between the 12 pin and 13 pin of the radio frequency transceiver chip U2_1, and the inductance L2_2 is connected between the 12 pin and 14 pin of the radio frequency transceiver chip U2_1; one end of the capacitor C2_1 is connected to the 13 pin of the radio frequency transceiver chip U2_1, and the other end is grounded; one end of the capacitor C2_4 is connected to the 12 pin of the radio frequency transceiver chip U2_1, the other end is connected to one end of the inductance L2_3, and the other end of the inductance L2_3 is connected to the 13 pin of the radio frequency transceiver chip U2_1; one end of the capacitor C2_2 is connected to the intersection of the inductances L2_3 and C2_4, and the other end is connected to the antenna J2_1; the 11 pin of the radio frequency transceiver chip U2_1 is a grounding pin which is grounded, the 14 pin of the radio frequency transceiver chip U2_1 is a power pin for providing power, and the 1-8 pins, 10 pin and 16 pin of the radio frequency transceiver chip U2₋1 are connected to the second microprocessor. When the second microprocessor 21 output the current signal of the electrical equipment 3 to the radio frequency transceiver chip U2_1, the radio frequency transceiver chip U2_1 performs coding processing on this signal and then output to the antenna J2_1, the J2_1 may transmit the current signal of the electrical equipment 3 to the first wireless bidirectional module 16; the J2_1 may also receive the control signal from the first wireless bidirectional module 16 and input it to the radio frequency transceiver chip U2_1 which then output the control signal to the second microprocessor 21, the second microprocessor 21 controls the switch control circuit 23 according to this control signal, thereby powering off/on the electrical equipment 3.

The types of the radio frequency transceiver chip U1_1 used by the first wireless bidirectional module 16 and the radio frequency transceiver chip U2_1 used by the second wireless bidirectional module 24 according to the present invention are both IA4421. Such chip has the features including less peripheral devices, automatic frequency control, assurance for the transceiver to be automatically adjusted to the frequency of the input signal, and the chip works in the frequency band 433/868/915MHz which needs no registration.

The second microprocessor 21 according to the present invention is a singlechip, the type of witch is PIC16F687. The indicator circuit 27 is composed of a light-emitting diode (LED) D2_9 and a resistor R2_10. One end of the R2_10 is connected to the output of the second voltage regulator circuit 223, and the other end is connected to the anode of the D2_9, the cathode of the D2_9 is connected to the second microprocessor 21, and the second microprocessor 21 may control the working status of the LED D2_9 display circuit by outputting the control signal to the indicator 27. Of course, the indicator circuit 27 may also use the display apparatus such as the LCD display screen, not limiting to the LED.

The switch control circuit 23 according to the present invention is composed of a relay J2_2, a transistor Q2_1, a diode D2_1 and resistors R2_1, R2_13. The 1 pin of J2_2 is connected to the output of the second power input circuit 221, the 2 pin of J2_2 is a common pin, the 3 pin of J2_2 is an output of the switch control circuit 23 for connecting with the power input of the electrical equipment 3. The 4 pin of J2_2 is connected to the output of the rectifying circuit 222, the 5 pin of J2_2 is connected to the collector of the Q2_1, and the emitter of the Q2_1 is grounded. The R2_13 is connected between the emitter and base of the Q2_1. The cathode of the D2_1 is connected to the 4 pin of 12_2, and the anode of the D2_1 is connected to the 5 pin of 12_2. The base of the Q2_1 is connected to one end of the R2_1, and the other end of the R2_1 is connected to the second microprocessor 21, such that the second microprocessor 21 may output the control signal for controlling the relay J2_2 to be closed or opened, thereby powering off/on the electrical equipment 3.

### Industrial applicability

The present invention may realize the bidirectional signal transmission, bidirectional control and remote control between the bidirectional wireless electrical energy monitoring apparatus and the bidirectional wireless electrical energy monitoring switchgear, the power consumption of multiple electrical equipments may be monitored by the bidirectional wireless electrical energy monitoring switchgear, and the users may operate the keys in the first key module, according to the power consumption sent by the bidirectional wireless electrical energy monitoring switchgear, to control the switch control circuit of the bidirectional wireless electrical energy monitoring switchgear, thereby powering on/off the electrical equipment, which has the effects of prompting power saving and reasonable power consumption.

## Claims

1. A bidirectional wireless electrical energy monitoring system for monitoring an electrical equipment (3), comprising a bidirectional wireless electrical energy monitoring apparatus (1) and a bidirectional wireless electrical energy monitoring switchgear (2); the bidirectional wireless electrical energy monitoring apparatus (1) comprising a first microprocessor (11), a display module (13) and a first key module (14), an input of the display module (13) being connected to a display driving output of the first microprocessor (1), and an output of the first key module (14) being connected to a key detection input of the first microprocessor (11); the bidirectional wireless electrical energy monitoring switchgear (2) comprising a second microprocessor (21), a current induction module (25) for measuring a current signal of the electrical equipment and a switch control circuit (23) for powering on/off the monitored electrical equipment (3), an output of the current induction module (25) being connected to a current detection input of the second microprocessor (21), and an input of the switch control circuit (23) being connected to a control output of the second microprocessor (21), wherein the bidirectional wireless electrical energy monitoring apparatus (1) also comprises a first wireless bidirectional module (16) for receiving a current signal from the bidirectional wireless electrical energy monitoring switchgear (2) and transmitting a control signal to the bidirectional wireless electrical energy monitoring switchgear (2), the first wireless bidirectional module (16) being connected to the first microprocessor (11); the bidirectional wireless electrical energy monitoring switchgear (2) also comprises a second wireless bidirectional module (24) for receiving the control signal from the bidirectional wireless electrical energy monitoring apparatus (1) and transmitting the current signal of electrical equipment to the first wireless bidirectional module (16) of the bidirectional wireless electrical energy monitoring apparatus (1), the second wireless bidirectional module (24) being connected to the second microprocessor (21); bidirectional wireless connection is realized between the bidirectional wireless electrical energy monitoring apparatus (1) and the bidirectional wireless electrical energy monitoring switchgear (2) through the first wireless bidirectional module and the second wireless bidirectional module for controlling, via a key input in the first key module, and via the bidirectional wireless connection, the switch control circuit (23) of the bidirectional electrical energy monitoring switchgear (1) for powering on/off the monitored electrical equipment (3).

2. The bidirectional wireless electrical energy monitoring system according to claim 1, wherein the first wireless bidirectional module (1) is composed of a radio frequency transceiver chip U1_1, a crystal oscillator Y1_1, an antenna J1_1, capacitors C1_1, C1_2, C1_4, C1_5 and inductances L1_1, L1_2, L1_3, one end of the crystal oscillator Y1_1 is connected to the 9 pin of the radio frequency transceiver chip U1_1, and the other end is grounded; one end of the capacitor C1_5 is connected to the 15 pin of the radio frequency transceiver chip U1_1, and the other end is grounded; the inductance L1_1 is connected between the 12 pin and 13 pin of the radio frequency transceiver chip U1_1, and the inductance L1_2 is connected between the 12 pin and 14 pin of the radio frequency transceiver chip U1_1; one end of the capacitor C1_1 is connected to the 13 pin of the radio frequency transceiver chip U1_1, and the other end is grounded; one end of the capacitor C1_4 is connected to the 12 pin of the radio frequency transceiver chip U1_1, the other end is connected to one end of the inductance L1_3, and the other end of the inductance L1_3 is connected to the 13 pin of the radio frequency transceiver chip U1_1; one end of the capacitor C1_2 is connected to the intersection of the inductances L1_3 and C1_4, and the other end is connected to the antenna J1_1; the 11 pin of the radio frequency transceiver chip U1_1 is a grounding pin which is grounded, the 14 pin of the radio frequency transceiver chip U1_1 is a power pin for providing power, and the 1-8 pins, 10 pin and 16 pin of the radio frequency transceiver chip U1_1 are connected to the first microprocessor.

3. The bidirectional wireless electrical energy monitoring system according to claim 1, wherein the first wireless bidirectional module (16) uses IA4421 as the radio frequency transceiver chip U1_1.

4. The bidirectional wireless electrical energy monitoring system according to claim 1, wherein the bidirectional wireless electrical energy monitoring apparatus (2) further comprises a clock and calendar module (15) that is connected to the first microprocessor (11) for configuration of the clock and calendar.

5. The bidirectional wireless electrical energy monitoring system according to claim 4, wherein the bidirectional wireless electrical energy monitoring apparatus (1) further comprises a first power source module (12) which is composed of a first power input circuit (121) and a first voltage regulator circuit (122), the input of the first power input circuit (121) is connected to an external power source, the output of the first power input circuit (121) is connected to the input of the first voltage regulator circuit (122), and the output of the first voltage regulator circuit (122) is connected to the power inputs of the first microprocessor (11), the display module (13), the first key module (14), the first wireless bidirectional module (16) and the clock and calendar module (15), respectively.

6. The bidirectional wireless electrical energy monitoring system according to claim 1, wherein the second wireless bidirectional module (24) is composed of a radio frequency transceiver chip U2_1, a crystal oscillator Y2_1, an antenna J2_1, capacitors C2_1, C2_2, C2_4, C2_5 and inductances L2_1, L2_2, L2_3, one end of the crystal oscillator Y2_1 is connected to the 9 pin of the radio frequency transceiver chip U2_1, and the other end is grounded; one end of the capacitor C2_5 is connected to the 15 pin of the radio frequency transceiver chip U2_1, and the other end is grounded; the inductance L2_1 is connected between the 12 pin and 13 pin of the radio frequency transceiver chip U2_1, and the inductance L2_2 is connected between the 12 pin and 14 pin of the radio frequency transceiver chip U2_1; one end of the capacitor C2_1 is connected to the 13 pin of the radio frequency transceiver chip U2_1, and the other end is grounded; one end of the capacitor C2_4 is connected to the 12 pin of the radio frequency transceiver chip U2_1, the other end is connected to one end of the inductance L2_3, and the other end of the inductance L2_3 is connected to the 13 pin of the radio frequency transceiver chip U2_1; one end of the capacitor C2_2 is connected to the intersection of the inductances L2_3 and C2_4, and the other end is connected to the antenna J2_1; the 11 pin of the radio frequency transceiver chip U2_1 is a grounding pin which is grounded, the 14 pin of the radio frequency transceiver chip U2_1 is a power pin for providing power, and the 1-8 pins, 10 pin and 16 pin of the radio frequency transceiver chip U2_1 are connected to the second microprocessor (21).

7. The bidirectional wireless electrical energy monitoring system according to claim 6, wherein the second wireless bidirectional module (24) uses IA4421 as the radio frequency transceiver chip U2_1.

8. The bidirectional wireless electrical energy monitoring system according to claim 1, wherein the bidirectional wireless electrical energy monitoring switchgear (2) further comprises a second key module (26), an indicator circuit (27), the output of the second key module (26) is connected to the key detection input of the second microprocessor (21), and the input of the indicator circuit (127) is connected to the status output of the second microprocessor (21).

9. The bidirectional wireless electrical energy monitoring system according to claim 8, wherein the bidirectional wireless electrical energy monitoring switchgear (2) further comprises a second power source module (22) which includes a second power input circuit (221), a rectifying circuit (222) and a second voltage regulator circuit (223), the input of the second power input circuit (221) is connected to an external power source, the output of the second power input circuit (221) is connected to the AC input of the switch control circuit (23) and the input of the rectifying circuit (222), respectively, the output of the rectifying circuit (222) is connected to the AC input of the switch control circuit (23) and the input of the second voltage regulator circuit (223), respectively, the output of the second voltage regulator circuit (223) is connected to the DC inputs of the second microprocessor (21), the current induction module (25), the second wireless bidirectional module (24), the second key module (26) and the indicator circuit (27), respectively.

10. The bidirectional wireless electrical energy monitoring system according to claim 9, wherein the second power source module (22) further comprises a voltage detection circuit (224), the input of the voltage detection circuit (224) is connected to the output of the second power input circuit (221), and the output of the voltage detection circuit (224) is connected to the voltage detection input of the second microprocessor (21) for detecting the input voltage of the power source.

## Patentansprüche

1. Bidirektionales drahtloses Stromüberwachungssystem zur Überwachung einer elektrischen Ausrüstung (3), umfassend ein bidirektionales drahtloses Stromüberwachungsgerät (1) und ein bidirektionales drahtloses Stromüberwachungs-Schaltgerät (2); wobei das bidirektionale drahtlose Stromüberwachungsgerät (1) einen ersten Mikroprozessor (11), ein Anzeigemodul (13) und ein erstes Schlüsselmodul (14) umfasst, wobei eine Eingabe des Anzeigemoduls (13) mit einem Anzeigetreiberausgang des ersten Mikroprozessors (1) verbunden ist, und wobei ein Ausgang des ersten Schlüsselmoduls (14) mit einer Schlüsselerfassungseingabe des ersten Mikroprozessors (11) verbunden ist, wobei das bidirektionale drahtlose Stromüberwachungs-Schaltgerät (2) einen zweiten Mikroprozessor (21), ein Strominduktionsmodul (25) zum Messen eines Stromsignals der elektrischen Ausrüstung und einen Schaltsteuerkreis (23) zum Ein-/Ausschalten der überwachten elektrischen Ausrüstung (3) umfasst, wobei ein Ausgang des Strominduktionsmoduls (25) mit der Stromerfassungseingabe des zweiten Mikroprozessors (21) verbunden ist und eine Eingabe des Schaltsteuerkreises (23) mit einem Steuerausgang des zweiten Mikroprozessors (21) verbunden ist, wobei das bidirektionale drahtlose Stromüberwachungsgerät (1) auch ein erstes drahtloses bidirektionales Modul (16) umfasst, um ein Stromsignal vom bidirektionalen drahtlosen Stromüberwachungs-Schaltgerät (2) zu empfangen und ein Steuersignal an das bidirektionale drahtlose Stromüberwachungs-Schaltgerät (2) zu senden, wobei das erste drahtlose bidirektionale Modul (16) mit dem ersten Mikroprozessor (11) verbunden ist; das bidirektionale drahtlose Stromüberwachungs-Schaltgerät (2) auch ein zweites drahtloses bidirektionales Modul (24) umfasst, um das Steuersignal vom bidirektionalen drahtlosen Stromüberwachungsgerät (1) zu empfangen und das Stromsignal der elektrischen Ausrüstung an das erste drahtlose bidirektionale Modul (16) des bidirektionalen drahtlosen Stromüberwachungsgeräts (1) zu senden, wobei das zweite drahtlose bidirektionale Modul (24) mit dem zweiten Mikroprozessor (21) verbunden ist; die bidirektionale drahtlose Verbindung zwischen dem bidirektionalen drahtlosen Stromüberwachungsgerät (1) und dem bidirektionalen drahtlosen Stromüberwachungs-Schaltgerät (2) durch das erste drahtlose bidirektionale Modul und das zweite drahtlose bidirektionale Modul durchgeführt wird, um über eine Schlüsseleingabe im ersten Schlüsselmodul und über die bidirektionale drahtlose Verbindung den Schaltsteuerkreis (23) des bidirektionalen Stromüberwachungs-Schaltgeräts (1) zu steuern, um die überwachte elektrische Ausrüstung (3) aus-/einzuschalten.

2. Bidirektionales drahtloses Stromüberwachungssystem nach Anspruch 1, wobei das erste drahtlose bidirektionale Modul (1) aus einem Funkfrequenz-Transceiverchip U1_1 besteht, einem Kristalloszillator Y 1_1, einer Antenne J1_1, Kondensatoren C1_1, C1_2, C1_4, C1_5 und Induktivitäten L1_1, L1 _2, L1_3,. ein Ende des Kristalloszillators Y1_1 mit dem Stift 9 des Funkfrequenz-Transceiverchips U1_1 verbunden ist; und das andere Ende geerdet ist; ein Ende des Kondensators C1_5 mit dem Stift 15 des Funkfrequenz-Transceiverchips U1_1 verbunden ist, und das andere Ende geerdet ist; die Induktivität L-1_1 zwischen Stift 12 und Stift 13 des Funkfrequenz-Transceiverchips U1_1 verbunden ist, die Induktivität L-1_2 zwischen Stift 12 und Stift 14 des Funkfrequenz-Transceiverchips U1_1 verbunden ist; ein Ende des Kondensators C1_1 mit dem Stift 13 des Funkfrequenz-Transceiverchips U1_1 verbunden ist und das andere Ende geerdet ist; ein Ende des Kondensators C1_4 mit dem Stift 12 des Funkfrequenz-Transceiverchips U1_1 verbunden ist, das andere Ende mit einem Ende der Induktanz L1_3 verbunden ist und das andere Ende der Induktanz L1_3 mit dem Stift 13 des Funkfrequenz-Transceiverchips U1_1 verbunden ist; ein Ende des Kondensators C1_2 mit der Schnittstellte der Induktanzen L1_3 und C1_4 verbunden ist, und das andere Ende mit der Antenne J 1_1 verbunden ist; und der Stift 11 des Funkfrequenz-Transceiverchips U1_1 ein Erdungsstift ist, der geerdet ist, der Stift 14 des Funkfrequenz-Transceiverchips U1_1 ein Leistungsstift ist, um Leistung bereitzustellen, und die Stifte 1 - 8, Stift 10 und Stift 16 des Funkfrequenz-Transceiverchips U1_1 mit dem ersten Mikroprozessor verbunden sind.

3. Bidirektionales drahtloses Stromüberwachungssystem nach Anspruch 1, wobei das erste drahtlose bidirektionale Modul (16) IA4421 als das Funkfrequenz-Transceiverchip U1_1 verwendet,

4. Bidirektionales drahtloses Stromüberwachungssystem nach Anspruch 1, wobei das bidirektionale drahtlose Stromüberwachungsgerät (2) weiter ein Uhr- und ein Kalendermodul (15) umfasst, das mit dem ersten Mikroprozessor (11) zur Konfiguration der Uhr und des Kalenders verbunden ist.

5. Bidirektionales drahtloses Stromüberwachungssystem nach Anspruch 4, wobei das bidirektionale drahtlose Stromüberwachungsgerät (1) weiter ein erstes Leistungsquellenmodul (32) umfasst, das aus einer ersten Leistungseingabeschaltung (121) und einer ersten Spannungregelschaltung (122) zusammengesetzt ist, die Eingabe der ersten Leistungsaufnahmeschaltung (121) mit einer externen Leistungsquelle verbunden ist, der Ausgang der ersten Leistungsaufnahmeschaltung (121) mit der Eingabe der ersten Spannungregelschaltung (122) verbunden ist, und der Ausgang der ersten Spannungregelschaltung (122) mit den Leistungseingaben des ersten Mikroprozessors (11), dem Anzeigemodul (13), dem ersten Schlüsselmodul (14), dem ersten drahtlosen bidirektionalen Modul (16) bzw. dem Uhr- und Kalendermodul (15) verbunden ist.

6. Bidirektionales drahtloses Stromüberwachungssystem nach Anspruch 1, wobei das zweite drahtlose bidirektionale Modul (24) aus einem Funkfrequenz-Transceiverchip U2_1 besteht, einem Kristalloszillator Y 2_1, einer Antenne J2_1, Kondensatoren C2_1, C2_2, C2_4, C2_5 und Induktivitäten L2_1, L2_2, L2_3, ein Ende des Kristalloszillators Y2_1 mit dem Stift 9 des Funkfrequenz-Transceiverchips U2_1 verbunden ist; und das andere Ende geerdet ist; ein Ende des Kondensators C2_5 mit dem Stift 15 des Funkfrequenz-Transceiverchips U2_1 verbunden ist, und das andere Ende geerdet ist; die Induktivität L2_1 zwischen Stift 12 und Stift 13 des Funkfrequenz-Transceiverchips U2_1 verbunden ist, die Induktivität L2_2 zwischen Stift 12 und Stift 13 des Funkfrequenz-Transceiverchips U2_1 verbunden ist; ein Ende des Kondensators C2_1 mit dem Stift 13 des Funkfrequenz-Transceiverchips U2_1 verbunden ist, und das andere Ende geerdet ist; ein Ende des Kondensators C2_4 mit dem Stift 12 des Funkfrequenz-Transceiverchips U2_1 verbunden ist, das andere Ende mit einem Ende der Induktanz L2_3 verbunden ist und das andere Ende der Induktivität L2_3 mit dem Stift 13 des Funkfrequenz-Transceiverchips U2_1 verbunden ist, ein Ende des Kondensators C2_2 mit der Schnittstellte der Induktanzen L2_3 und C2_4 verbunden ist, und das andere Ende mit der Antenne J2_1 verbunden ist; der Stift 11 des Funkfrequenz-Transceiverchips U2_1 ein Erdungsstift ist, der geerdet ist, der Stift 14 des Funkfrequenz-Transceiverchips U2_1 ein Leistungsstift ist, um Leistung bereitzustellen, und die Stifte 1 - 8, Stift 10 und Stift 16 des Funkfrequenz-Transceiverchips U2_1 mit dem zweiten Mikroprozessor (21) verbunden sind.

7. Bidirektionales drahtloses Stromüberwachungssystem nach Anspruch 6, wobei das zweite drahtlose bidirektionale Modul (24) IA4421 als den Funkfrequenz-Transceiverchip U2_1 verwendet,

8. Bidirektionales drahtloses Stromüberwachungssystem nach Anspruch 1, wobei das bidirektionale drahtlose Stromüberwachungs-Schaltgerät (2) weiter ein zweites Schlüsselmodul (26) umfasst, eine Anzeigeschaltung (27), der Ausgang des zweiten Schlüsselmoduls (26) mit der Schlüsselnachweiseingabe des zweiten Mikroprozessors (21) verbunden ist und der Eingang der Anzeigeschaltung (127) mit einem Statusausgang des zweiten Mikroprozessors (21) verbunden ist,.

9. Bidirektionales drahtloses Stromüberwachungssystem nach Anspruch 8, wobei das bidirektionale drahtlose Stromüberwachungs-Schaltgerät (2) weiter ein zweites Leistungsquellenmodul (22) umfasst, das eine zweite Leistungseingabeschaltung (221) umfasst, eine Gleichrichtungsschaltung (222) und eine zweite Spannungsregelschaltung (223), wobei die Eingabe der zweiten Leistungseingabeschaltung (221) mit einer externen Leistungsquelle verbunden ist, der Ausgang der zweiten Leistungseingabeschaltung (221) mit der AC-Eingabe des Schaltsteuerkreises (23) bzw. der Eingabe der Gleichrichtungsschaltung (222) verbunden ist, der Ausgang der Gleichrichtungsschaltung (222) mit der AC-Eingabe des Schaltsteuerkreises (23) bzw. mit der Eingabe der zweiten Spannungsregelschaltung (223) verbunden ist, der Ausgang der zweiten Spannungsregelschaltung (121) mit den DC-Eingaben des zweiten Mikroprozessors (21), dem Strominduktionsmodul (25), dem zweiten drahtlosen bidirektionalen Modul (24) dem zweiten Schlüsselmodul (26) bzw. der Anzeigeschaltung (27) verbunden ist.

10. Bidirektionales drahtloses Stromüberwachungssystem nach Anspruch 9, wobei das zweite Leistungsquellenmodul (22) weiter eine Spannungsnachweisschaltung (224) umfasst, die Eingabe der Spannungsnachweisschaltung (224) mit dem Ausgang der zweiten Leistungseingabeschaltung (221) verbunden ist und der Ausgang der Spannungsnachweisschaltung (224) mit der Spannungsnachweiseingabe des zweiten Mikroprozessors (21) verbunden ist, um die Eingabespannung der Stromquelle nachzuweisen.

## Revendications

1. Système sans fil bidirectionnel de surveillance d'énergie électrique permettant de surveiller un équipement électrique (3), comprenant un appareil sans fil bidirectionnel de surveillance d'énergie électrique (1) et un dispositif de commutation sans fil bidirectionnel de surveillance d'énergie électrique (2) ; l'appareil sans fil bidirectionnel de surveillance d'énergie électrique (1) comprenant un premier microprocesseur (11), un module d'affichage (13) et un premier module à touche (14), une entrée du module d'affichage (13) étant connectée à une sortie pilote d'affichage du premier microprocesseur (1), et une sortie du premier module à touche (14) étant connectée à une entrée de détection de clé du premier microprocesseur (11) ; le dispositif de commutation sans fil bidirectionnel de surveillance d'énergie électrique (2) comprenant un second microprocesseur (21), un module d'induction de courant (25) permettant de mesurer un signal de courant de l'équipement électrique et un circuit de commande de commutation (23) permettant de mettre sous tension/hors tension l'équipement électrique surveillé (3), une sortie du module d'induction de courant (25) étant connectée à une entrée de détection de courant du second microprocesseur (21), et une entrée du circuit de commande de commutation (23) étant connectée à une sortie de commande du second microprocesseur (21), dans lequel l'appareil sans fil bidirectionnel de surveillance d'énergie électrique (1) comprend également un premier module sans fil bidirectionnel (16) permettant de recevoir un signal de courant provenant du dispositif de commutation sans fil bidirectionnel de surveillance d'énergie électrique (2) et de transmettre un signal de commande au dispositif de commutation sans fil bidirectionnel de surveillance d'énergie électrique (2), le premier module sans fil bidirectionnel (16) étant connecté au premier microprocesseur (11) ; le dispositif de commutation sans fil bidirectionnel de surveillance d'énergie électrique (2) comprend également un second module sans fil bidirectionnel (24) permettant de recevoir le signal de commande provenant de l'appareil sans fil bidirectionnel de surveillance d'énergie électrique (1) et de transmettre le signal de courant de l'équipement électrique au premier module sans fil bidirectionnel (16) de l'appareil sans fil bidirectionnel de surveillance d'énergie électrique (1), le second module sans fil bidirectionnel (24) étant connecté au second microprocesseur (21) ; une connexion sans fil bidirectionnelle est réalisée entre l'appareil sans fil bidirectionnel de surveillance d'énergie électrique (1) et le dispositif de commutation sans fil bidirectionnel de surveillance d'énergie électrique (2) par l'intermédiaire du premier module sans fil bidirectionnel et du second module sans fil bidirectionnel permettant de commander, via une entrée de touche dans le premier module à touche, et via la connexion sans fil bidirectionnelle, le circuit de commande de commutation (23) du dispositif de commutation bidirectionnel de surveillance d'énergie électrique (1) permettant de mettre sous tension/hors tension l'équipement électrique surveillé (3).

2. Système sans fil bidirectionnel de surveillance d'énergie électrique selon la revendication 1, dans lequel le premier module sans fil bidirectionnel (1) est composé d'une puce d'émetteur-récepteur à radiofréquence U1_1, d'un oscillateur à cristal Y1_1, d'une antenne J1_1, de condensateurs C1_1, C1_2, C1_4, C1_5 et d'inductances L1_1, L1_2, L1_3, une extrémité de l'oscillateur à cristal Y1_1 est connectée à la broche 9 de la puce d'émetteur-récepteur à radiofréquence U1_1, et l'autre extrémité est mise à la masse ; une extrémité du condensateur C1_5 est connectée à la broche 15 de la puce d'émetteur-récepteur à radiofréquence U1_1, et l'autre extrémité est mise à la masse ; l'inductance L1_1 est connectée entre la broche 12 et la broche 13 de la puce d'émetteur-récepteur à radiofréquence U1_{_}1, et l'inductance L1_2 est connectée entre la broche 12 et la broche 14 de la puce d'émetteur-récepteur à radiofréquence U1_1 ; une extrémité du condensateur C1_1 est connectée à la broche 13 de la puce d'émetteur-récepteur à radiofréquence U1_1, et l'autre extrémité est mise à la masse ; une extrémité du condensateur C1_4 est connectée à la broche 12 de la puce d'émetteur-récepteur à radiofréquence U1_1, l'autre extrémité est connectée à l'extrémité de l'inductance L1_3, et l'autre extrémité de l'inductance L1_3 est connectée à la broche 13 de la puce d'émetteur-récepteur à radiofréquence U1_1 ; une extrémité du condensateur C1_2 est connectée à l'intersection des inductances L1_3 et C1_4, et l'autre extrémité est connectée à l'antenne J1_1 ; la broche 11 de la puce d'émetteur-récepteur à radiofréquence U1_1 est une broche de mise à la masse qui est mise à la masse, la broche 14 de la puce d'émetteur-récepteur à radiofréquence U1_1 est une broche d'alimentation permettant de fournir une alimentation, et les broches 1 à 8, la broche 10 et la broche 16 de la puce d'émetteur-récepteur à radiofréquence U1_1 sont connectées au premier microprocesseur.

3. Système sans fil bidirectionnel de surveillance d'énergie électrique selon la revendication 1, dans lequel le premier module sans fil bidirectionnel (16) utilise IA4421 en tant que puce d'émetteur-récepteur à radiofréquence U1_1.

4. Système sans fil bidirectionnel de surveillance d'énergie électrique selon la revendication 1, dans lequel l'appareil sans fil bidirectionnel de surveillance d'énergie électrique (2) comprend en outre un module d'horloge et de calendrier (15) qui est connecté au premier microprocesseur (11) pour une configuration de l'horloge et du calendrier.

5. Système sans fil bidirectionnel de surveillance d'énergie électrique selon la revendication 4, dans lequel l'appareil sans fil bidirectionnel de surveillance d'énergie électrique (1) comprend en outre un premier module de source d'alimentation (12) qui est composé d'un premier circuit d'entrée d'alimentation (121) et d'un premier circuit régulateur de tension (122), l'entrée du premier circuit d'entrée d'alimentation (121) est connectée à une source d'alimentation externe, la sortie du premier circuit d'entrée d'alimentation (121) est connectée à l'entrée du premier circuit régulateur de tension (122), et la sortie du premier circuit régulateur de tension (122) est connectée aux entrées d'alimentation du premier microprocesseur (11), du module d'affichage (13), du premier module à touche (14), du premier module bidirectionnel sans fil (16) et du module d'horloge et de calendrier (15), respectivement.

6. Système sans fil bidirectionnel de surveillance d'énergie électrique selon la revendication 1, dans lequel le second module bidirectionnel sans fil (24) est composé d'une puce d'émetteur-récepteur à radiofréquence U2_1, d'un oscillateur à cristal Y2_1, d'une antenne J2_1, de condensateurs C2_1, C2_2, C2_4, C2_5 et d'inductances L2_1, L2_2, L2_3, une extrémité de l'oscillateur à cristal Y2_1 est connectée à la broche 9 de la puce d'émetteur-récepteur à radiofréquence U2_1, et l'autre extrémité est mise à la masse ; une extrémité du condensateur C2_5 est connectée à la broche 15 de la puce d'émetteur-récepteur à radiofréquence U2_1, et l'autre extrémité est mise à la masse ; l'inductance L2_1 est connectée entre la broche 12 et la broche 13 de la puce d'émetteur-récepteur à radiofréquence U2_1, et l'inductance L2_2 est connectée entre la broche 12 et la broche 14 de la puce d'émetteur-récepteur à radiofréquence U2_1 ; une extrémité du condensateur C2_1 est connectée à la broche 13 de la puce d'émetteur-récepteur à radiofréquence U2_1, et l'autre extrémité est mise à la masse ; une extrémité du condensateur C2_4 est connectée à la broche 12 de la puce d'émetteur-récepteur à radiofréquence U2_1, l'autre extrémité est connectée à une extrémité de l'inductance L2_3, et l'autre extrémité de l'inductance L2_3 est connectée à la broche 13 de la puce d'émetteur-récepteur à radiofréquence U2_1 ; une extrémité du condensateur C2_2 est connectée à l'intersection des inductances L2_3 et C2_4, et l'autre extrémité est connectée à l'antenne J2_1 ; la broche 11 de la puce d'émetteur-récepteur à radiofréquence U2_1 est une broche de mise à la masse qui est mise à la masse, la broche 14 de la puce d'émetteur-récepteur à radiofréquence U2_1 est une broche d'alimentation permettant de fournir une alimentation, et les broches 1 à 8, la broche 10 et la broche 16 de la puce d'émetteur-récepteur à radiofréquence U2_1 sont connectées au second microprocesseur (21).

7. Système sans fil bidirectionnel de surveillance d'énergie électrique selon la revendication 6, dans lequel le second module bidirectionnel sans fil (24) utilise IA4421 en tant que puce d'émetteur-récepteur à radiofréquence U2_1.

8. Système sans fil bidirectionnel de surveillance d'énergie électrique selon la revendication 1, dans lequel le dispositif de commutation sans fil bidirectionnel de surveillance d'énergie électrique (2) comprend en outre un second module à touche (26), un circuit indicateur (27), la sortie du second module à touche (26) est connectée à l'entrée de détection de touche du second microprocesseur (21), et l'entrée du circuit indicateur (127) est connectée à la sortie d'état du second microprocesseur (21).

9. Système sans fil bidirectionnel de surveillance d'énergie électrique selon la revendication 8, dans lequel le dispositif de commutation sans fil bidirectionnel de surveillance d'énergie électrique (2) comprend en outre un second module d'alimentation (22) qui comprend un second circuit d'entrée d'alimentation (221), un circuit redresseur (222) et un second circuit régulateur de tension (223), l'entrée du second circuit d'entrée d'alimentation (221) est connectée à une source d'alimentation externe, la sortie du second circuit d'entrée d'alimentation (221) est connectée à l'entrée CA du circuit de commande de commutation (23) et à l'entrée du circuit redresseur (222), respectivement, la sortie du circuit redresseur (222) est connectée à l'entrée CA du circuit de commande de commutation (23) et à l'entrée du second circuit de régulateur de tension (223), respectivement, la sortie du second circuit régulateur de tension (223) est connectée aux entrées CC du second microprocesseur (21), du module d'induction de courant (25), du second module bidirectionnel sans fil (24), du second module à touche (26) et du circuit indicateur (27), respectivement.

10. Système sans fil bidirectionnel de surveillance d'énergie électrique selon la revendication 9, dans lequel le second module de source d'alimentation (22) comprend en outre un circuit de détection de tension (224), l'entrée du circuit de détection de tension (224) est connectée à la sortie du second circuit d'entrée d'alimentation (221), et la sortie du circuit de détection de tension (224) est connectée à l'entrée de détection de tension du second microprocesseur (21) permettant de détecter la tension d'entrée de la source d'alimentation.
